# EUROPEAN PATENT SPECIFICATION

(11) **EP 3 134 199 B1**
(45) Date of publication and mention of the grant of the patent: **01.08.2018**
(21) Application number: 15720020.5
(22) Date of filing: 23.04.2015
(51) Int. Cl.: F25D 11/00, F25D 17/04, A23B 7/152, B01D 53/00, B01D 53/30, B01D 53/72, B01D 53/86

(54) **A REEFER CONTAINER FOR TRANSPORTING AND STORING A PLURALITY OF PRODUCE**
KÜHLWAGENBEHÄLTER ZUM TRANSPORTIEREN UND AUFBEWAHREN EINER VIELZAHL VON LANDWIRTSCHAFTLICHEN ERZEUGNISSEN
RÉCIPIENT RÉFRIGÉRÉ POUR LE TRANSPORT ET LE STOCKAGE D'UNE PLURALITÉ DE PRODUITS

(30) Priority: 24.04.2014 EP 14165868
(43) Date of publication of application: 01.03.2017
(73) Proprietor: Kjærulf Pedersen A/S, 2630 Taastrup (DK)
(72) Inventor: EHRHORN, Kristian, DK-5260 Odense S (DK)
(74) Representative: Hoffmann Dragsted A/S
(86) International application number: PCT/EP2015/058796
(87) International publication number: WO 2015/162208

(56) References cited:
- EP-A1- 2 256 485
- JP-A- 2006 212 603
- US-A- 5 644 070
- US-A1- 2005 123 455
- US-B1- 6 280 633

## Description

### Field of the invention

The present invention relates to a reefer container for transporting and storing a plurality of produce at a predetermined temperature. Further, the present invention relates to a method for measuring an ozone concentration in an airstream in a reefer container according to the present invention.

### Background art

Ethylene can build up in reefer containers during transport of ethylene-producing fruits and vegetables, i.e. produce, during transport and storage in the reefer containers. This ethylene accelerates the ripening process on the perishable cargo in an undesirable manner.

To avoid acceleration of this ripening process, the ethylene must be depleted. This can be done by exposing the ethylene-contaminated air to ozone, which oxidises the organic and other airborne organic material in the air. However, the cargo must not be exposed directly to the ozone, as the cargo may be damaged by such exposure. The ozone is then to be reduced which is normally done by means of a catalyst.

Ozone is extremely dangerous to humans in concentrations down to 10 ppb. It is therefore important that the efficiency of the catalyst is maintained at all time during operation at a sufficiently high level.

In known solutions, this can be controlled by measuring the ozone concentration downstream the catalyst, e.g. the concentration at the exit of the catalyst should be below a safety threshold. If the concentration exceeds this safety level, the system should be turned off or otherwise tuned to a safe exit concentration.

However, the environment in which the measuring equipment for measuring ozone concentration must function is harsh, as the temperature in reefers may vary from -40 up to +65 degrees Celsius and the humidity may be high and condensing. The cargo transported in the reefer may be any type of goods which may contribute to contamination of the reefer atmosphere, which may be harmful to the measurement equipment.

EP 2 256 485 A1 discloses a reefer container and a method according to the preamble of claims 1 and 14.

### Summary of the invention

It is an object of the present invention to wholly or partly overcome the above disadvantages and drawbacks of the prior art. More specifically, it is an object to provide an improved reefer container having an atmosphere-controlling system wherein the measurement of the ozone concentration is facilitated.

The above objects, together with numerous other objects, advantages and features, which will become evident from the below description, are accomplished by a solution in accordance with the present invention by a reefer container for transporting and storing a plurality of produce at a predetermined temperature, the produce generating ethylene and other organic compounds during transport and storage, said reefer container comprising
- a substantially closed room having an atmosphere,
- a cooling device for maintaining the room at the predetermined temperature, and
- an atmosphere-controlling system for controlling the atmosphere in the room of the reefer container, the atmosphere-controlling system comprising
   - a system inlet and a system outlet, a flow direction of an airstream being defined between the system inlet and the system outlet,
   - a fan arranged at the system outlet,
   - an ethylene reduction unit for reducing a content of ethylene of the atmosphere in the room,
   - a catalyst unit arranged downstream the ethylene reduction unit, the catalyst unit being adapted to reduce a content of ozone generated during the reduction of ethylene, the catalyst unit having a catalyst inlet, a catalyst outlet and a catalyst midsection arranged substantially between the catalyst inlet and catalyst outlet, and
   - a control unit,
   wherein a first measuring point is arranged upstream the catalyst inlet and a second measuring point is arranged at the catalyst midsection, the first measuring point and the second measuring point being connected with at least a first ozone sensor so that via the first measuring point a first ozone concentration of the air before the air enters the catalyst unit can be measured, and via the second measuring point a second ozone concentration of the air present in the catalyst midsection of the catalyst unit can be measured, the first ozone sensor being connected with the control unit, and
   wherein the first ozone concentration C1 is compared to the second ozone concentration C2 in the control unit in order to calculate the expected ozone concentration of the air downstream the catalyst unit and the efficiency of the catalyst section.

The ozone reduction rate R is calculated as R=C1/C2, where C1 is the first ozone concentration and C2 is the second ozone concentration. Furthermore, the catalyst efficiency E of the first section of the catalyst is calculated by E=1-C2/C1. Assuming that the catalyst efficiency E is the same for the second part after the midsection, the total reduction of the two catalyst sections is Rₜₒₜ = R².

The first measuring point may be fluidly connected with a first pipe having a first pipe inlet and a first pipe outlet, and the second measuring point may be fluidly connected with a second pipe having a second pipe inlet and a second pipe outlet.

Moreover, a three-way valve may be arranged so that the first pipe outlet is connected with a first valve inlet of the three-way valve and the second pipe outlet is connected with a second valve inlet of the three-way valve, and the first ozone sensor may be connected with an valve outlet of the three-way valve.

Also, the control unit may be connected with the three-way valve via a solenoid, the solenoid being adapted to activate the three-way valve so that the first valve inlet can be brought into fluid communication with the valve outlet and the second valve inlet can be brought into fluid communication with the valve outlet, respectively.

When the three-way valve is implemented, the first ozone sensor is able to sense the concentration from both the first and the second measuring points and the second ozone sensor is therefore not needed.

Furthermore, the first ozone sensor may be connected with the first measuring point, and a second ozone sensor may be connected with the second measuring point for measuring the second ozone concentration, the first ozone sensor and the second ozone sensor both being connected with the control unit.

Additionally, the first ozone sensor may be arranged at the first pipe outlet and the second ozone sensor may be arranged at the second pipe outlet.

The first measuring point and the second measuring point may be adapted to take out gas samples of the airstream.

Moreover, the second ozone concentration may be less than 1/30 of the first ozone concentration.

Also, the first ozone sensor and/or the second ozone sensor may be adapted to measure a level of ozone concentration higher than 1 ppmv.

Further, the ozone sensor may be based on optical absorption of UV light at 240-270 nm, in which the ozone absorbs the energy from the UV light.

In addition, the ethylene reduction unit may comprise an ultra violet (UVC) lamp adapted to radiate the airstream with ultra violet (UVC) light so that ozone is generated from oxygen molecules present in the airstream, whereby the ozone depletes the ethylene and/or other organic compounds in the ethylene reduction unit.

The catalyst unit may comprise MnO₂ and CuO for depleting the ozone to oxygen.

Also, the fan may be connected with the control unit.

In the reefer container according to the present invention, a pressure sensor may be connected with the first pipe and/or the second pipe, the pressure sensor being arranged between the pipe inlets and the pipe outlets, the pressure sensor being connected with the control unit.

Moreover, the catalyst unit may comprise a temperature sensor, the temperature sensor being connected with the control unit.

Furthermore, the ethylene reduction unit may comprise a heating element adapted to heat the airstream in the ethylene reduction unit, the heating element being connected with the control unit.

Additionally, the system may comprise a humidity sensor, the humidity sensor being connected with the control unit.

The present invention also relates to a method for measuring an ozone concentration in an airstream in a reefer container as described above, the method comprising the steps of:
- reducing a content of ethylene of the atmosphere in the room of the reefer container by means of ozone,
- reducing a content of ozone in a catalyst unit having a catalyst inlet, a catalyst outlet and a catalyst midsection arranged substantially between the catalyst inlet and catalyst outlet,
- measuring a first ozone concentration at a first measuring point arranged upstream the catalyst inlet,
- measuring a second ozone concentration at a second measuring point arranged at the catalyst midsection, and
- comparing the first ozone concentration with the second ozone concentration in a control unit in order to calculate the expected ozone concentration of the airstream downstream the catalyst unit.

### Brief description of the drawings

The invention and its many advantages will be described in more detail below with reference to the accompanying schematic drawings, which for the purpose of illustration show some non-limiting embodiments and in which
Fig. 1 shows a reefer container in a top view with a view into the substantially closed room,
Fig. 2 shows schematically an embodiment of an atmosphere-controlling system,
Fig. 3 shows schematically another embodiment of the atmosphere-controlling system,
Fig. 4 shows the measuring system of the ozone sensor, and
Fig. 5 shows schematically another embodiment of the atmosphere-controlling system.

All the figures are highly schematic and not necessarily to scale, and they show only those parts which are necessary in order to elucidate the invention, other parts being omitted or merely suggested.

### Detailed description of the invention

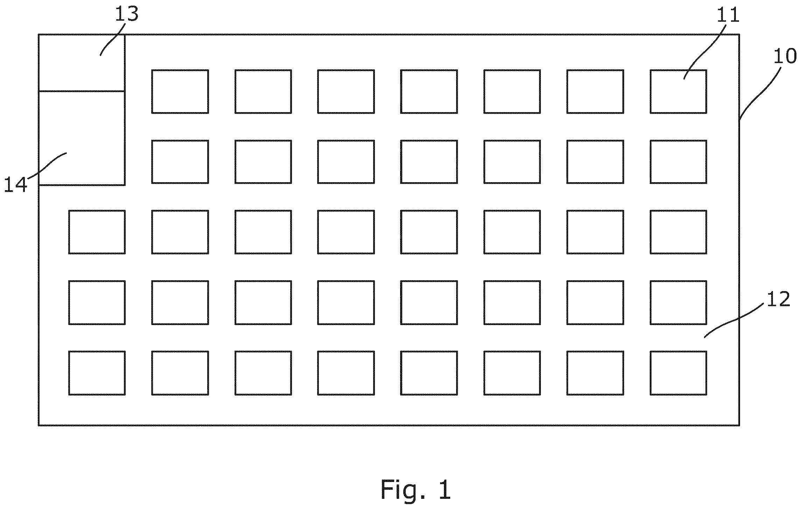

Fig. 1 shows schematically a reefer container 10 according to the invention. The reefer container is adapted to transport and store a plurality of produce 11, such as fruit and vegetables. The produce 11 may generate ethylene and other organic compounds during the transport and storage, and said ethylene and other organic compounds are desirable to deplete since the ethylene present in the reefer container accelerates the ripening effect on the perishable cargo.

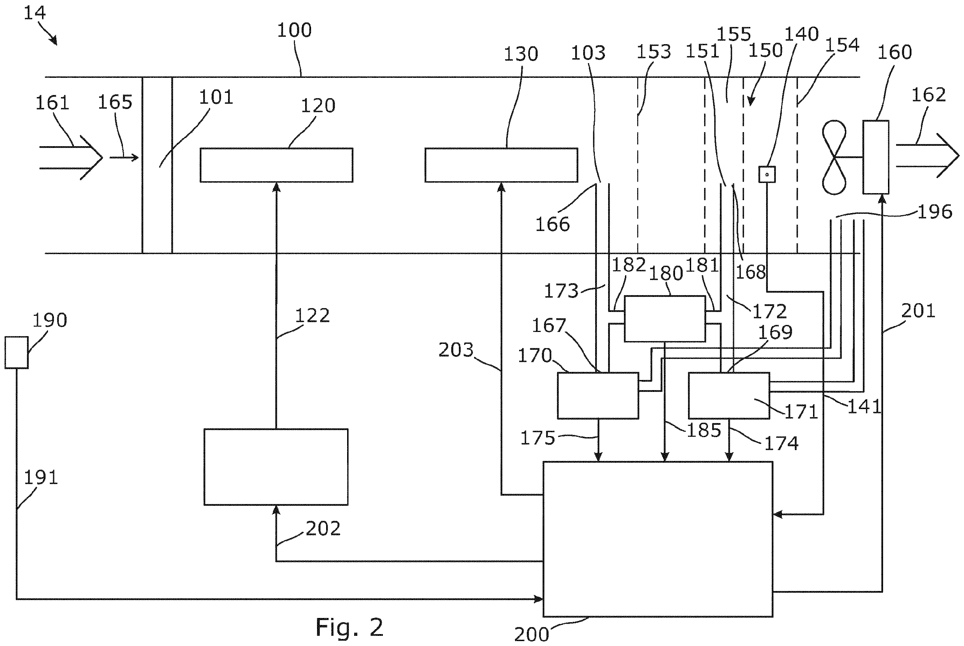

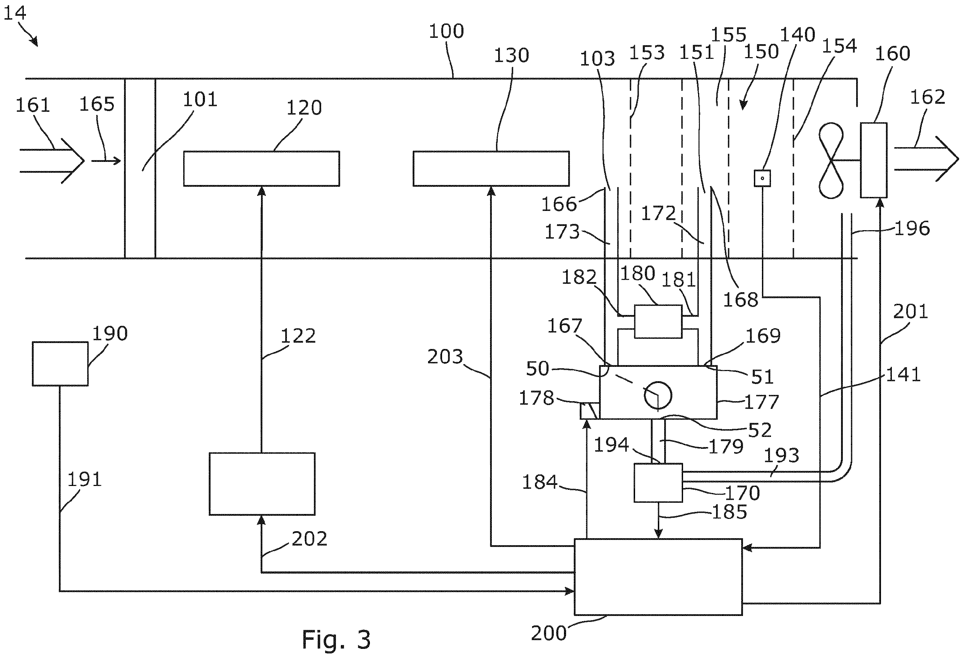

The reefer container 10 comprises a substantially closed room 12 and a cooling device 13 for maintaining the room 12 and thereby the produce at a predetermined temperature during transport. According to the inventive idea, the reefer container 10 also comprises an atmosphere-controlling system 14 for controlling the atmosphere in the room 12. The atmosphere-controlling system 14 will be described further below in connection with Figs. 2 and 3.

Fig. 2 shows an embodiment of the atmosphere-controlling system 14. The atmosphere-controlling system 14 comprises a system inlet 161 and a system outlet 162, a flow direction 165 of an airstream being defined between the system inlet and the system outlet. Furthermore, a fan 160 or ventilator is arranged at the system outlet 162 for controlling a flow rate of the airstream.

The atmosphere-controlling system 14 also comprises an ethylene reduction unit 100 for reducing a content of ethylene of the atmosphere in the room. The different components of the ethylene reduction unit 100 will be described further below. In addition, a catalyst unit 150 is arranged downstream the ethylene reduction unit 100, the catalyst unit 150 being adapted to reduce a content of ozone generated during the reduction of ethylene, the catalyst unit 150 having a catalyst inlet 153, a catalyst outlet 154 and a catalyst midsection 155 arranged substantially between the catalyst inlet 153 and catalyst outlet 154. The atmosphere-controlling system 14 furthermore comprises a control unit 200, such as a CPU.

According to the invention, a first measuring point 103 is arranged upstream the catalyst inlet 153 and a second measuring point 151 is arranged at the catalyst midsection 155. In this embodiment, the first measuring point 103 is fluidly connected with a first pipe 173 having a first pipe inlet 166 and a first pipe outlet 167, and the second measuring point 151 is fluidly connected with a second pipe 172 having a second pipe inlet 168 and a second pipe outlet 169. A first ozone sensor 170 is arranged at the first pipe outlet 167 and a second ozone sensor 171 is arranged at the second pipe outlet 169. Thus, in this embodiment, the first ozone sensor 170 is connected with the first measuring point 103 via the first pipe 173, whereby the first ozone sensor can measure a first ozone concentration of the air before the air enters the catalyst unit 150, and the second ozone sensor 171 is connected with the second measuring point 151 via the second pipe 172, so that the second ozone sensor 171 can measure a second ozone concentration of the air present in the catalyst midsection 155 of the catalyst unit 150. When the first ozone sensor 170 has measured the first ozone concentration, it sends a signal 175 to the control unit 200, and when the second ozone sensor 171 has measured the second ozone concentration, it also sends a signal 174 to the control unit 200.

In the control unit 200, the first ozone concentration is compared to the second ozone concentration in order to calculate the expected ozone concentration of the air downstream the catalyst unit 150.

When the first ozone concentration is C1 and the second ozone concentration is C2, the ozone reduction rate R is calculated as R=C1/C2. Furthermore, the catalyst efficiency E of the first section of the catalyst is calculated by E=1-C2/C1. Assuming that the catalyst efficiency E is the same for the second part after the midsection, the total reduction of the two catalyst sections is Rₜₒₜ = R².

By way of example, if the first ozone concentration C1 is measured to be 50ppmv and the second ozone concentration C2 is measured to be 1ppmv, the catalyst efficiency will be E = 1-C2/C1 = 1-1/50 = 0.98.

According to the inventive idea, the second ozone concentration C2 is the ozone concentration in the middle of the catalyst and the first ozone concentration C1 is the ozone concentration before the catalyst. Assuming that the efficiency of the second half of the catalyst is the same as in the first half of the catalyst, then the ozone concentration C3 after the catalyst will be reduced to C3 = C2/(C1*C1) = 50/(50*50) = 0.02ppmv, or C3 = C1*(1-E)*(1-E) = 50*0.02*0.02 =0.02ppmv.

Accordingly, even if the ozone sensor has a detection limit of 1 ppmv, the ozone concentration C3 at the exit of the catalyst can be determined to a level of 0.02ppmv or (1-E) times better.

By measuring the ozone concentration of the airstream from the ethylene reduction unit 100 upstream the catalyst unit 150, where the ozone concentration is several order of magnitude higher than downstream the catalyst unit, and by providing another ozone concentration measurement of the air at the midsection 155 in the catalyst unit 150, it is possible to compare the upstream ozone concentration with the midsection concentration and thereby calculate and establish the efficiency E=1-C2/C1 of the catalyst unit. As the efficiency E of the catalyst unit 150 is calculated as a ratio between the upstream ozone concentration and midsection ozone concentration of the airstream, there is no demand on the actual accuracy or precision of the ozone sensor used, presuming that the same sensor is used to measure both the upstream ozone concentration and the midsection ozone concentration.

The ozone concentration downstream the catalyst unit is very low and thereby very difficult to measure properly, unless a very sensitive and precise ozone sensor is used, which is very expensive. However, since the ozone concentration upstream the catalyst unit and the ozone concentration at the midsection of the catalyst unit are considerably higher than the ozone concentration downstream the catalyst unit, these concentrations are easier to measure without the use of high precision measurement equipment. Hereby a huge cost saving in relation to the ozone sensors used in the atmosphere-controlling system according to the present invention is obtained.

According to the invention, the first ozone sensor 170 and/or the second ozone sensor 171 are/is adapted to measure a level of ozone concentration higher than 1 ppmv.

Furthermore, the ozone sensor may be based on optical absorption of UV light at 240-270 nm, in which the ozone absorbs the energy from the UV light. The UV light may be an UV LED and the detector may be an UV sensitive photodiode. The ozone sensor is preferably a cuvette with ozone-containing air, through which the light is led. The relationship between the light amount at zero ozone and x%v of oxygen is provided by Beer-Lambert law, meaning that the highest signal is obtained at zero concentration and that the signal decreases exponentially at higher concentrations.

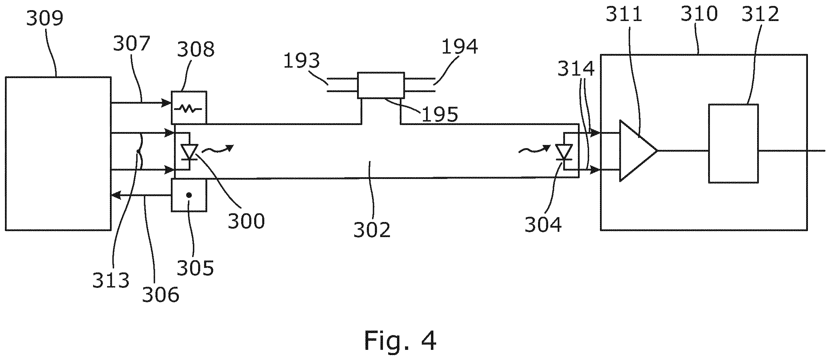

Fig. 4 shows the measuring system of the ozone sensors 170 and 171 of Fig. 2. It comprises a cuvette 302 which is equipped with an UV-LED 300 at one end and a photodiode 304 in the other end. The cuvette also comprises a particle filter 195, here in the form of a porous membrane 195 and gas inlet 193 and gas outlet 194.

The power of the radiated UV power from the UV-LED 300 is characterised by a relatively high dependence on the UV-LED temperature. In order to obtain a stabilised radiant power from the UV-LED 300, a heating resistor 308 and a temperature sensor 305 are placed close to and in good thermal contact with the UV-LED. A temperature controller 309 that controls the temperature of the UV-LED 300 is connected to the heating resistor 308 by the connection 307 and to the temperature sensor 305 by the connection 306. The regulated current to the UV-LED is also connected to this controller 309 by the wires 313. The ozone sensor also comprises a signal processor 310 which is connected with the photodiode by the wires 314. The signal processor 310 has an analogue amplifier 311 and an A/D converter together with a microprocessor 312.

The cuvette 302 is preferably protected against contaminating particles by the particle filter 195 covering the inlet to the cuvette. The particle filter may for instance be made of porous Polytetrafluoroethylene (PTFE).

This type of ozone sensor is more robust than known electrochemical ozone sensors or heated metal oxide semiconductor ozone sensors.

By measuring upstream the catalyst unit, the ozone concentration may be between 10-100 ppmv, typically around 30ppmv, and the ozone concentration at the midsection of the catalyst unit is normally less than 1ppmv.

In another (not shown) embodiment, the first ozone sensor may be connected with the first measuring point, and a second ozone sensor may be connected with the second measuring point for measuring the second ozone concentration. Thus, the first measuring point may be coinciding with the first ozone sensor and the second measuring point may be coinciding with the second ozone sensor, respectively.

Advantageously, the first measuring point and the second measuring point are adapted to take out gas samples of the airstream, so that the ozone sensor connected with the measuring point is able to measure the ozone content and thereby the ozone concentration of the gas sample.

Preferably, the second ozone concentration may be less than 1/30 or preferably 1/100 of the first ozone concentration.

The ethylene reduction unit 100 of Fig. 2 may comprise an ultra violet (UVC) lamp 120 adapted to radiate the airstream with ultra violet (UVC) light so that ozone is generated from oxygen molecules present in the airstream, whereby the ozone depletes the ethylene and/or other organic compounds in the ethylene reduction unit 100. The air from the room is led into the ethylene reduction unit 100 via the system inlet 161 and is passed through an input dust filter 101. As mentioned above, the ozone is generated from the oxygen molecules in the airstream by radiation of UVC light from the UVC lamp 120. In the ethylene reduction unit 100, which has an airflow, the relatively high ozone concentration, up to a WT% of 1, depletes the ethylene and other organic compounds present in the airstream. Since the air leaving the ethylene reduction unit 100 then contains elevated ozone concentrations, it may be reduced to a predetermined and acceptable level. Accordingly, the air is fed through the catalyst unit 150 so that the catalyst unit 150 depletes the ozone to oxygen before the air via the fan 160 is returned to the room of the reefer container. The catalyst unit 150 may comprise MnO₂ and CuO for depleting the ozone to oxygen.

Furthermore, it is possible to use a robust UV absorption measuring system in a very cost-saving manner compared to a high precision UV absorption sensor normally used to measure the very low ozone concentrations found downstream the catalyst unit.

As mentioned above, the ozone is generated by radiation of the air oxygen with UV light. The ozone generation will be proportional to the oxygen concentration in the air which may vary from about 2 to 21%. This means that by measuring the upstream ozone concentration, the oxygen concentration may be calculated (the ozone concentration is proportional with the oxygen concentration, whereby the ozone concentration measurement before the catalyst unit is a linear function of the oxygen concentration). This may make another oxygen sensor, used for regulating the oxygen concentration in the room of the reefer container, redundant.

There are also other parameters which influence the ozone concentration in the air, such as flow rate of the air, temperature, UV effect at 185 nm and oxygen concentration in the air entering the system inlet.

Thus, the fan 160 may be connected with the control unit 200 so that the control unit 200 may adjust the flow or speed of the fan 160 by means of the signal 201 in view of the measured ozone concentrations. Accordingly, the airflow generated by the fan 160 may be controlled in order to trim and optimise the catalyst unit 150, e.g. if the catalyst unit 150 is overloaded, the airflow can be reduced in order to reduce the ozone load, or if the oxygen concentration is low, the ozone concentration will also be low, which would allow the airflow to be increased.

Furthermore, a pressure sensor 180 may be connected with the first pipe 173 via pipe part 182 and/or the second pipe 172 via pipe part 181, the pressure sensor 180 being arranged between the pipe inlets 166, 168 and the pipe outlets 167, 169, the pressure sensor 180 being connected with the control unit 200 and sending signal 185 to the control unit. The pressure sensor 180 determines the airflow by the differential pressure between the air pressure upstream the catalyst unit 150 and the air pressure at the midsection of the catalyst unit 150.

In addition, the catalyst unit 150 may comprise a temperature sensor 140, the temperature sensor 140 being connected with the control unit 200 via 141. The temperature in the catalyst unit 150 is measured in order to ensure that the catalyst unit 150 has a suitable working temperature at around 30 degrees Celsius. This may be controlled by regulating the effect supplied to the heating element 130 or the UVC lamp 120.

Also, the ethylene reduction unit 100 may comprise a heating element 130 adapted to heat the airstream in the ethylene reduction unit 100, the heating element 130 also being connected with the control unit 200 via 203 so that the control unit 200 can control the temperature of the heating element in view of the measured catalyst temperature. The temperature measured by the temperature sensor 140 in the catalyst unit 150 can also be used as a measure of the airflow through the catalyst when the ambient air temperature and the added power from the UV lamp 120 are known.

The system 14 may also comprise a humidity sensor 190, the humidity sensor 190 being connected with the control unit 200 via 191.

The ozone concentration upstream the catalyst unit is also dependent on the UV power from the UV lamp 120. Thus, the control unit 200 may also control the power of the UV lamp 120 via the signals 202, 122.

In Fig. 3, another embodiment of the atmosphere-controlling system 14 is shown. The system 14 in Fig. 3 comprises substantially the same components as the embodiment described in connection with Fig. 2 and will therefore not be described again in relation to Fig. 3. However, for the purposes of facilitating understanding, the reference numbers to the different components have been kept on Fig. 3 even though the components in question are not explicitly described here.

In this embodiment, the first measuring point 103 is also arranged upstream the catalyst inlet 153 and the second measuring point 151 is arranged at the catalyst midsection 155. The first measuring point 103 and the second measuring point 151 are connected with a first ozone sensor 170 so that via the first measuring point 103 a first ozone concentration of the air before the air enters the catalyst unit 150 can be measured, and via the second measuring point 151 a second ozone concentration of the air present in the catalyst midsection 155 of the catalyst unit 150 can be measured, the first ozone sensor 170 being connected with the control unit 200 via 170. In the same manner as described in connection with Fig. 2, the first ozone concentration is compared to the second ozone concentration in the control unit 200 in order to calculate the expected ozone concentration of the air downstream the catalyst unit 150. Thus, in this embodiment, only a single ozone sensor is used for measuring the first ozone concentration and the second concentration.

In order to make this possible, a three-way valve 177 is arranged so that the first pipe outlet 167 is connected with a first valve inlet 50 of the three-way valve 177 and the second pipe outlet 169 is connected with a second valve inlet 51 of the three-way valve 177. In addition, the first ozone sensor 170 is connected with a valve outlet 52 of the three-way valve 177 via the pipe part 179. The control unit 200 is connected with the three-way valve 177 via a solenoid 178. The solenoid 178 is adapted to activate the three-way valve 177 so that the first valve inlet 50 can be brought into fluid communication with the valve outlet 52 and the second valve inlet 51 can be brought into fluid communication with the valve outlet 52, respectively. This causes the control unit 200 to be able to control whether it is at the first measuring point 103 or at the second measuring point 151 that ozone concentration is to be measured.

The calculation of the catalyst efficiency E and the reduction rates R and Rₜₒₜ may be calculated by the ozone sensor.

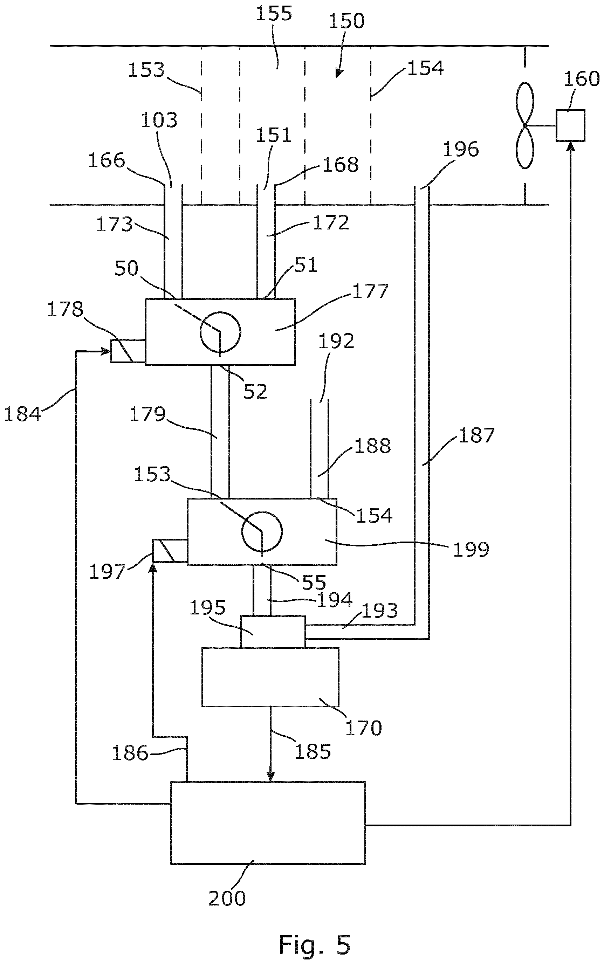

In Fig. 5, another embodiment of the atmosphere-controlling system is shown. It comprises a second three-way valve 199 which has the purpose of switching the gas supply to the first ozone sensor 170. In one position of the valve 199, the gas to the ozone sensor 170 is the ambient gas in the container via measuring point 192, representing a very low concentration of ozone. The measuring point 192 is connected to the second three-way valve 199 via 188. This low concentration of ozone can be used as a zero reference when calibrating the ozone sensor 170. In the second position of the second three-way valve 199, the measured gas comes from the measuring points 103 and 151, where the concentrations are C1 and C2, respectively. A solenoid 197 connected to the controller 200 by the electrical connection 186 makes it possible to control the valve.

Although the invention has been described in the above in connection with preferred embodiments of the invention, it will be evident for a person skilled in the art that several modifications are conceivable without departing from the invention as defined by the following claims.

## Claims

1. A reefer container (10) for transporting and storing a plurality of produce (11) at a predetermined temperature, the produce (11) generating ethylene and other organic compounds during transport and storage, said reefer container (10) comprising:
- a substantially closed room (12) having an atmosphere,
- a cooling device (13) for maintaining the room (12) at the predetermined temperature, and
- an atmosphere-controlling system (14) for controlling the atmosphere in the room (12) of the reefer container (10), the atmosphere-controlling system (14) comprising:
- a system inlet (161) and a system outlet (162), a flow direction (165) of an airstream being defined between the system inlet (161) and the system outlet (162),
- a fan (160) arranged at the system outlet (162),
- an ethylene reduction unit (100) for reducing a content of ethylene of the atmosphere in the room (12),
- a catalyst unit (150) arranged downstream the ethylene reduction unit (100), the catalyst unit (150) being adapted to reduce a content of ozone generated during the reduction of ethylene, the catalyst unit (150) having a catalyst inlet (153), a catalyst outlet (154) and a catalyst midsection (155) arranged substantially between the catalyst inlet (153) and catalyst outlet (154), and
- a control unit (200),
wherein a first measuring point (103) is arranged upstream the catalyst inlet (153), the reefer container being **characterised by** a second measuring point (151) arranged at the catalyst midsection (155), the first measuring point (103) and the second measuring point (151) being connected with at least a first ozone sensor (170), so that via the first measuring point (103) a first ozone concentration (C1) of the air, before the air enters the catalyst unit (150), can be measured, and via the second measuring point (151) a second ozone concentration (C2) of the air present in the catalyst midsection (155) of the catalyst unit (150) can be measured, the first ozone sensor being connected with the control unit, and
wherein the first ozone concentration (C1) is compared to the second ozone concentration (C2) in the control unit (200) in order to calculate the expected ozone concentration of the air downstream the catalyst unit (150) and the efficiency of the catalyst section.

2. A reefer container (10) according to claim 1, wherein the first measuring point is fluidly connected with a first pipe (173) having a first pipe inlet (166) and a first pipe outlet (167), and the second measuring point is fluidly connected with a second pipe (172) having a second pipe inlet (168) and a second pipe outlet (169).

3. A reefer container (10) according to claim 2, wherein a three-way valve (177) is arranged so that the first pipe outlet is connected with a first valve inlet (50) of the three-way valve and the second pipe outlet is connected with a second valve inlet (51) of the three-way valve, and wherein the first ozone sensor is connected with an valve outlet (52) of the three-way valve.

4. A reefer container (10) according to claim 3, wherein the control unit is connected with the three-way valve via a solenoid (178), the solenoid being adapted to activate the three-way valve so that the first valve inlet can be brought into fluid communication with the valve outlet and the second valve inlet can be brought into fluid communication with the valve outlet, respectively.

5. A reefer container (10) according to claim 1, wherein the first ozone sensor (170) is connected with the first measuring point (103), and a second ozone sensor (171) is connected with the second measuring point (151) for measuring the second ozone concentration, the first ozone sensor and the second ozone sensor both being connected with the control unit.

6. A reefer container (10) according to claims 2 and 5, wherein the first ozone sensor (170) is arranged at the first pipe outlet (167) and the second ozone sensor (171) is arranged at the second pipe outlet (169).

7. A reefer container (10) according to claim 1, wherein the second ozone concentration is less than 1/30 of the first ozone concentration.

8. A reefer container (10) according to any of the preceding claims, wherein the first ozone sensor (170) and/or the second ozone sensor (171) are/is adapted to measure a level of ozone concentration higher than 1 ppmv.

9. A reefer container (10) according to claim 1, wherein the ethylene reduction unit comprises an ultra violet (UVC) lamp (120) adapted to radiate the airstream with ultra violet (UVC) light so that ozone is generated from oxygen molecules present in the airstream, whereby the ozone depletes the ethylene and/or other organic compounds in the ethylene reduction unit.

10. A reefer container (10) according to claim 1, wherein the catalyst unit (150) comprises MnO₂ and CuO for depleting the ozone to oxygen.

11. A reefer container (10) according to claim 2, wherein a pressure sensor (180) is connected with the first pipe and/or the second pipe, the pressure sensor being arranged between the pipe inlets and the pipe outlets, the pressure sensor being connected with the control unit (200).

12. A reefer container (10) according to claim 1, wherein the ethylene reduction unit comprises a heating element (130) adapted to heat the airstream in the ethylene reduction unit, the heating element being connected with the control unit (200).

13. A reefer container (10) according to claim 1, wherein the system (14) comprises a humidity sensor (190), the humidity sensor being connected with the control unit (200).

14. A method for measuring an ozone concentration in an airstream in a reefer container (10) according to any of the preceding claims, the method comprising the steps of:
- reducing a content of ethylene of the atmosphere in the room (12) of the reefer container by means of ozone,
- reducing a content of ozone in a catalyst unit (150) having a catalyst inlet (153), a catalyst outlet (154) and a catalyst midsection (155) arranged substantially between the catalyst inlet and catalyst outlet,
- measuring a first ozone concentration at a first measuring point (103) arranged upstream the catalyst inlet, the method being **characterised by**
- measuring a second ozone concentration at a second measuring point (151) arranged at the catalyst midsection, and
- comparing the first ozone concentration with the second ozone concentration in a control unit (200) in order to calculate the expected ozone concentration of the airstream downstream the catalyst unit and the efficiency of the catalyst section.

## Patentansprüche

1. Kühlcontainer (10) für den Transport und die Lagerung einer Vielzahl von Produkten (11) bei einer vorgegebenen Temperatur, wobei die Produkte (11) während des Transports und der Lagerung Ethylen und weitere organische Verbindungen erzeugen und wobei der Kühlcontainer (10) Folgendes umfasst:
- einen im Wesentlichen geschlossenen Raum (12), der eine Gasatmosphäre hat,
- eine Kühlvorrichtung (13), um den Raum (12) bei der vorgegebenen Temperatur zu halten, und
- ein Gasatmosphären-Kontrollsystem (14) zum Kontrollieren der Gasatmosphäre in dem Raum (12) des Kühlcontainers (10), wobei das Gasatmosphären-Kontrollsystem (14) Folgendes umfasst:
- einen Systemeinlass (161) und einen Systemauslass (162), eine Flussrichtung (165) eines Luftstroms, der zwischen dem Systemeinlass (161) und dem Systemauslass (162) vorgesehen ist,
- einen Ventilator (160), der am Systemauslass (162) angeordnet ist,
- eine Ethylen-Reduzierungseinheit (100) zum Verringern eines Gehalts an Ethylen in der Gasatmosphäre des Raums (12),
- eine Katalysatoreinheit (150), die stromabwärts von der Ethylen-Reduzierungseinheit (100) angeordnet ist, wobei die Katalysatoreinheit (150) dafür eingerichtet ist, einen Gehalt an Ozon zu verringern, das während der Ethylenreduzierung erzeugt wird, wobei die Katalysatoreinheit (150) einen Katalysatoreinlass (153), einen Katalysatorauslass (154) und einen Katalysator-Mittelabschnitt (155), der im Wesentlichen zwischen dem Katalysatoreinlass (153) und dem Katalysatorauslass (154) angeordnet ist, hat, und
- eine Steuereinheit (200),
wobei ein erster Messpunkt (103) stromaufwärts des Katalysatoreinlasses (153) angeordnet ist und wobei der Kühlcontainer durch Folgendes gekennzeichnet ist:
einen zweiten Messpunkt (151), der im Katalysator-Mittelabschnitt (155) angeordnet ist, wobei der erste Messpunkt (103) und der zweite Messpunkt (151) mit wenigstens einem ersten Ozonsensor (170) verbunden sind, so dass über den ersten Messpunkt (103) eine erste Ozonkonzentration (C1) der Luft, bevor die Luft in die Katalysatoreinheit (150) eintritt, gemessen werden kann und über den zweiten Messpunkt (151) eine zweite Ozonkonzentration (C2) der Luft, die im Katalysator-Mittelabschnitt (155) der Katalysatoreinheit (150) vorhanden ist, gemessen werden kann, wobei der erste Ozonsensor mit der Steuereinheit verbunden ist und wobei die erste Ozonkonzentration (C1) in der Steuereinheit (200) mit der zweiten Ozonkonzentration (C2) verglichen wird, um die erwartete Ozonkonzentration der Luft stromabwärts der Katalysatoreinheit (150) und die Wirksamkeit des Katalysatorabschnitts zu berechnen.

2. Kühlcontainer (10) nach Anspruch 1, wobei der erste Messpunkt mit einer ersten Leitung (173), die einen ersten Leitungseinlass (166) und einen ersten Leitungsauslass (167) hat, fluidbezogen verbunden ist und der zweite Messpunkt mit einer zweiten Leitung (172), die einen zweiten Leitungseinlass (168) und einen zweiten Leitungsauslass (169) hat, fluidbezogen verbunden ist.

3. Kühlcontainer (10) nach Anspruch 2, wobei ein Dreiwegeventil (177) derart angeordnet ist, dass der erste Leitungsauslass mit einem ersten Ventileinlass (50) des Dreiwegeventils verbunden ist und der zweite Leitungsauslass mit einem zweiten Ventileinlass (51) des Dreiwegeventils verbunden ist, und wobei der erste Ozonsensor mit einem Ventilauslass (52) des Dreiwegeventils verbunden ist.

4. Kühlcontainer (10) nach Anspruch 3, wobei die Steuereinheit mit dem Dreiwegeventil über einen Magnetspulenschalter (178) verbunden ist und wobei der Magnetspulenschalter dafür eingerichtet ist, das Dreiwegeventil zu betätigen, derart, dass der erste Ventileinlass mit dem Ventilauslass fluidbezogen verbunden werden kann, bzw. dass der zweite Ventileinlass mit dem Ventilauslass fluidbezogen verbunden werden kann.

5. Kühlcontainer (10) nach Anspruch 1, wobei der erste Ozonsensor (170) mit dem ersten Messpunkt (103) verbunden ist und ein zweiter Ozonsensor (171) mit dem zweiten Messpunkt (151) verbunden ist, um die zweite Ozonkonzentration zu messen, wobei der erste Ozonsensor und der zweite Ozonsensor beide mit der Steuereinheit verbunden sind.

6. Kühlcontainer (10) nach den Ansprüchen 2 und 5, wobei der erste Ozonsensor (170) am ersten Leitungsauslass (167) angeordnet ist und der zweite Ozonsensor (171) am zweiten Leitungsauslass (169) angeordnet ist.

7. Kühlcontainer (10) nach Anspruch 1, wobei die zweite Ozonkonzentration weniger als 1/30 der ersten Ozonkonzentration beträgt.

8. Kühlcontainer (10) nach einem der vorhergehenden Ansprüche, wobei der erste Ozonsensor (170) und/oder der zweite Ozonsensor (171) dafür eingerichtet sind/ist, ein Ozonkonzentrationsniveau zu messen, das größer als 1 ppmv ist.

9. Kühlcontainer (10) nach Anspruch 1, wobei die Ethylen-Reduzierungseinheit eine ultraviolette (UVC) Lampe (120) umfasst, die dafür eingerichtet ist, den Luftstrom mit ultraviolettem (UVC) Licht zu bestrahlen, so dass Ozon aus Sauerstoffmolekülen erzeugt wird, die im Luftstrom vorhanden sind, wobei das Ozon das Ethylen und/oder weitere organische Verbindungen in der Ethylen-Reduzierungseinheit abbaut.

10. Kühlcontainer (10) nach Anspruch 1, wobei die Katalysatoreinheit (150) MnO₂ und CuO umfasst, um das Ozon zu Sauerstoff abzubauen.

11. Kühlcontainer (10) nach Anspruch 2, wobei ein Drucksensor (180) mit der ersten Leitung und/oder der zweiten Leitung verbunden ist und wobei der Drucksensor zwischen den Leitungseinlässen und den Leitungsauslässen angeordnet ist und der Drucksensor mit der Steuereinheit (200) verbunden ist.

12. Kühlcontainer (10) nach Anspruch 1, wobei die Ethylen-Reduzierungseinheit ein Heizelement (130) umfasst, das dafür eingerichtet ist, den Luftstrom in der Ethylen-Reduzierungseinheit aufzuheizen, wobei das Heizelement mit der Steuereinheit (200) verbunden ist.

13. Kühlcontainer (10) nach Anspruch 1, wobei das System (14) einen Feuchtigkeitssensor (190) umfasst und der Feuchtigkeitssensor mit der Steuereinheit (200) verbunden ist.

14. Verfahren zum Messen einer Ozonkonzentration in einem Luftstrom in einem Kühlcontainer (10) nach einem der vorhergehenden Ansprüche, wobei das Verfahren die folgenden Schritte umfasst:
- Verringern eines Gehalts an Ethylen der Gasatmosphäre im Raum (12) des Kühlcontainers mittels Ozon,
- Verringern eines Gehalts an Ozon in einer Katalysatoreinheit (150), die einen Katalysatoreinlass (153), einen Katalysatorauslass (154) und einen Katalysator-Mittelabschnitt (155), der im Wesentlichen zwischen dem Katalysatoreinlass und dem Katalysatorauslass angeordnet ist, hat,
- Messen einer ersten Ozonkonzentration an einem ersten Messpunkt (103), der stromaufwärts des Katalysatoreinlasses angeordnet ist,
wobei das Verfahren durch Folgendes gekennzeichnet ist,
- Messen einer zweiten Ozonkonzentration an einem zweiten Messpunkt (151), der im Katalysator-Mittelabschnitt angeordnet ist, und
- Vergleichen der ersten Ozonkonzentration mit der zweiten Ozonkonzentration in einer Steuereinheit (200), um die erwartete Ozonkonzentration des Luftstroms stromabwärts der Katalysatoreinheit und die Wirksamkeit des Katalysatorabschnitts zu berechnen.

## Revendications

1. Conteneur réfrigéré (10) pour transporter et stocker une pluralité de produits (11) à une température prédéterminée, les produits (11) générant de l'éthylène et d'autres composés organiques pendant le transport et le stockage, ledit conteneur réfrigéré (10) comprenant :
- une chambre sensiblement fermée (12) ayant une atmosphère,
- un dispositif de refroidissement (13) pour maintenir la chambre (12) à la température prédéterminée, et
- un système de régulation d'atmosphère (14) pour réguler l'atmosphère dans la chambre (12) du conteneur réfrigéré (10), le système de régulation d'atmosphère (14) comprenant :
- une admission système (161) et un refoulement système (162), une direction d'écoulement (165) d'un courant d'air étant définie entre l'admission système (161) et le refoulement système (162),
- un ventilateur (160) agencé au niveau du refoulement système (162),
- une unité de réduction d'éthylène (100) pour réduire une teneur en éthylène de l'atmosphère dans la chambre (12),
- une unité de catalyseur (150) agencée en aval de l'unité de réduction d'éthylène (100), l'unité de catalyseur (150) étant adaptée pour réduire une teneur en ozone généré pendant la réduction d'éthylène, l'unité de catalyseur (150) ayant une admission de catalyseur (153), un refoulement de catalyseur (154) et une section médiane de catalyseur (155) agencée sensiblement entre l'admission de catalyseur (153) et le refoulement de catalyseur (154), et
- une unité de régulation (200),
dans lequel un premier point de mesure (103) est agencé en amont de l'admission de catalyseur (153), le conteneur réfrigéré étant **caractérisé par** un second point de mesure (151) agencé au niveau de la section médiane de catalyseur (155), le premier point de mesure (103) et le second point de mesure (151) étant raccordés à au moins un premier capteur d'ozone (170), si bien que via le premier point de mesure (103), une première concentration en ozone (C1) de l'air, avant que l'air n'entre dans l'unité de catalyseur (150), peut être mesurée, et via le second point de mesure (151), une seconde concentration en ozone (C2) de l'air présent dans la section médiane de catalyseur (155) de l'unité de catalyseur (150) peut être mesurée, le premier capteur d'ozone étant raccordé à l'unité de régulation, et
dans lequel la première concentration en ozone (C1) est comparée à la seconde concentration en ozone (C2) dans l'unité de régulation (200) afin de calculer la concentration en ozone attendue de l'air en aval de l'unité de catalyseur (150) et le rendement de la section de catalyseur.

2. Conteneur réfrigéré (10) selon la revendication 1, dans lequel le premier point de mesure est raccordé fluidiquement à un premier tuyau (173) ayant une première admission de tuyau (166) et un premier refoulement de tuyau (167), et le second point de mesure est raccordé fluidiquement à un second tuyau (172) ayant une seconde admission de tuyau (168) et un second refoulement de tuyau (169).

3. Conteneur réfrigéré (10) selon la revendication 2, dans lequel une vanne à trois voies (177) est agencée pour que le premier refoulement de tuyau soit raccordé à une première admission de vanne (50) de la vanne à trois voies et que le second refoulement de tuyau soit raccordé à une seconde admission de vanne (51) de la vanne à trois voies, et dans lequel le premier capteur d'ozone est raccordé à un refoulement de vanne (52) de la vanne à trois voies.

4. Conteneur réfrigéré (10) selon la revendication 3, dans lequel l'unité de régulation est raccordée à la vanne à trois voies via un solénoïde (178), le solénoïde étant adapté pour activer la vanne à trois voies pour que la première admission de vanne puisse être amenée en communication fluidique avec le refoulement de vanne et que la seconde admission de vanne puisse être amenée en communication fluidique avec le refoulement de vanne, respectivement.

5. Conteneur réfrigéré (10) selon la revendication 1, dans lequel le premier capteur d'ozone (170) est raccordé au premier point de mesure (103), et un second capteur d'ozone (171) est raccordé au second point de mesure (151) pour mesurer la seconde concentration en ozone, le premier capteur d'ozone et le second capteur d'ozone étant tous deux raccordés à l'unité de régulation.

6. Conteneur réfrigéré (10) selon les revendications 2 et 5, dans lequel le premier capteur d'ozone (170) est agencé au niveau du premier refoulement de tuyau (167) et le second capteur d'ozone (171) est agencé au niveau du second refoulement de tuyau (169).

7. Conteneur réfrigéré (10) selon la revendication 1, dans lequel la seconde concentration en ozone est inférieure à 1/30 de la première concentration en ozone.

8. Conteneur réfrigéré (10) selon l'une quelconque des revendications précédentes, dans lequel le premier capteur d'ozone (170) et/ou le second capteur d'ozone (171) sont/est adapté(s) pour mesurer un niveau de concentration en ozone supérieur à 1 ppmv.

9. Conteneur réfrigéré (10) selon la revendication 1, dans lequel l'unité de réduction d'éthylène comprend une lampe à ultraviolet (UVC) (120) adaptée pour rayonner de la lumière ultraviolette (UVC) sur le courant d'air pour que de l'ozone soit généré à partir de molécules d'oxygène présentes dans le courant d'air, moyennant quoi l'ozone appauvrit l'éthylène et/ou d'autres composés organiques dans l'unité de réduction d'éthylène.

10. Conteneur réfrigéré (10) selon la revendication 1, dans lequel l'unité de catalyseur (150) comprend du MnO₂ et du CuO pour appauvrir l'ozone en oxygène.

11. Conteneur réfrigéré (10) selon la revendication 2, dans lequel un capteur de pression (180) est raccordé au premier tuyau et/ou au second tuyau, le capteur de pression étant agencé entre les admissions de tuyau et les refoulements de tuyau, le capteur de pression étant raccordé à l'unité de régulation (200).

12. Conteneur réfrigéré (10) selon la revendication 1, dans lequel l'unité de réduction d'éthylène comprend un élément chauffant (130) adapté pour chauffer le courant d'air dans l'unité de réduction d'éthylène, l'élément chauffant étant raccordé à l'unité de régulation (200).

13. Conteneur réfrigéré (10) selon la revendication 1, dans lequel le système (14) comprend un capteur d'humidité (190), le capteur d'humidité étant raccordé à l'unité de régulation (200).

14. Procédé de mesure d'une concentration en ozone dans un courant d'air dans un conteneur réfrigéré (10) selon l'une quelconque des revendications précédentes, le procédé comprenant les étapes de :
- réduction d'une teneur en éthylène de l'atmosphère dans la chambre (12) du conteneur réfrigéré au moyen d'ozone,
- réduction d'une teneur en ozone dans une unité de catalyseur (150) ayant une admission de catalyseur (153), un refoulement de catalyseur (154) et une section médiane de catalyseur (155) agencée sensiblement entre l'admission de catalyseur et le refoulement de catalyseur,
- mesure d'une première concentration en ozone au niveau d'un premier point de mesure (103) agencé en amont de l'admission de catalyseur,
le procédé étant **caractérisé par**
- la mesure d'une seconde concentration en ozone en un second point de mesure (151) agencé au niveau de la section médiane de catalyseur, et
- la comparaison de la première concentration en ozone à la seconde concentration en ozone dans une unité de régulation (200) afin de calculer la concentration en ozone attendue du courant d'air en aval de l'unité de catalyseur et le rendement de la section de catalyseur.
